# EUROPÄISCHE PATENTSCHRIFT

(11) **EP 3 645 435 B1**
(45) Veröffentlichungstag und Bekanntmachung des Hinweises auf die Patenterteilung: **24.06.2026**
(21) Anmeldenummer: 18724887.7
(22) Anmeldetag: 16.05.2018
(51) Int. Cl.: B65G 59/04, B65G 61/00

(54) **DEPALETTIERUNGSVORRICHTUNG ZUM DEPALETTIEREN EINES TRANSPORTBEHÄLTERS VON EINER LADEFLÄCHE**
DEPALLETIZING DEVICE FOR DEPALLETIZING A TRANSPORT RECEPTACLE FROM A STORAGE SURFACE
DISPOSITIF DE DÉPALETTISATION POUR DÉPALETTISER UN CONTENEUR DE TRANSPORT D'UNE SURFACE DE CHARGEMENT

(30) Priorität: 28.06.2017 DE 102017210865
(43) Veröffentlichungstag der Anmeldung: 06.05.2020
(73) Patentinhaber: Bayerische Motoren Werke Aktiengesellschaft, 80809 München (DE)
(72) Erfinder: IRRENHAUSER, Thomas, 80797 München (DE); POSS, Christian, 80809 München (DE); TRAUTNER, Mario, 80339 München (DE)
(86) Internationale Anmeldenummer: PCT/EP2018/062746
(87) Internationale Veröffentlichungsnummer: WO 2019/001840

(56) Entgegenhaltungen:
- EP-A1- 2 096 054
- EP-A1- 2 636 620
- EP-A1- 2 805 903
- WO-A1-2015/028019
- DE-A1- 102004 033 437
- DE-T2- 69 205 309
- JP-A- H09 118 311
- US-A1- 2017 137 236

## Beschreibung

Die Erfindung betrifft eine Depalettierungsvorrichtung zum Depalettieren eines Transportbehälters von einer Ladefläche und ein Verfahren zum Betreiben einer solchen Depalettierungsvorrichtung.

Die DE 692 05 309 T2 offenbart einen Tisch mit rechtwinklig laufenden, antreibbaren Kugeln zum orthogonalen Sortieren flacher Gegenstände, wobei die Gegenstände von den Kugeln getragen werden, und aufgrund einer Bewegung der Kugeln auf dem Tisch bewegbar sind.

Die EP 2 411 305 B1 offenbart ein Umlenkfördersystem mit einem modularen Gurt einer Vielzahl von Kugeln und einer Vielzahl von zylindrischen Walzen. Die Kugeln sind in dem Gurt angeordnet, sodass diese auf beiden Seiten des Gurtes aus diesem herausragen. Mittels der zylindrischen Walzen sind die Kugeln antreibbar, während die Kugeln mittels des modularen Gurtes in Bezug zu den antreibbaren Walzen bewegt werden. Ein auf die Kugeln aufgestellter Gegenstand kann gedreht und/oder translatorisch bewegt werden.

Die WO 2015/028019 A1 offenbart eine Gegenstandsverbringungsvorrichtung mit einem aus einer Vielzahl von Lamellen gebildeten länglichen Fördermittel, wobei die jeweilige Lamelle ein Rollelement aufweist. Das jeweilige Rollelement kann antreibbar ausgebildet sein. Hierdurch offenbart WO 2015/028019 A1 den Oberbegriff des unabhängigen Anspruchs 1.

Ferner ist aus der JP H09 118311 A ein beweglicher Gepäcklademaschinenkörper als bekannt zu entnehmen.

Ferner ist aus dem allgemeinen Stand der Technik, insbesondere aus dem Bereich der Logistik, bekannt, dass für ein Depalettieren häufig Roboter eingesetzt werden, welche üblicherweise stationär gebunden sind. Bei den eingangs beschriebenen Vorrichtungen und bei Robotern ist es von Nachteil, dass aufgrund von Verletzungsgefahr menschliche Arbeitskräfte einen Sicherheitsabstand zu diesen Vorrichtungen bzw. zu den Robotern einhalten müssen. Das bedeutet, dass ein besonders hoher Platzbedarf für ein Depalettieren geboten ist.

Insbesondere nachteilig bei Robotern ist, dass diese aufgrund von umfangreicher und häufiger Wartung sowie besonders hohen Anschaffungskosten einen besonders intensiven Einsatz finanzieller Mittel bedingen.

Aufgabe der vorliegenden Erfindung ist es, eine besonders platzsparende und flexible Depalettierungsvorrichtung zum Depalettieren von Transportbehältern bereitzustellen. Ferner ist es Aufgabe der Erfindung, ein Verfahren zum Betreiben einer solchen, besonders platzsparenden und flexiblen Depalettierungsvorrichtung bereitzustellen. Diese Aufgabe wird erfindungsgemäß durch eine Depalettierungsvorrichtung mit den Merkmalen des Patentanspruchs 1 sowie durch ein Verfahren zum Betreiben einer solchen Depalettierungsvorrichtung mit den Merkmalen des Patentanspruchs 7 gelöst.

Vorteilhafte Ausgestaltungen mit zweckmäßigen Weiterbildungen der Erfindung sind in den übrigen Patentansprüchen angegeben.

Vorteile und vorteilhafte Ausgestaltungen der erfindungsgemäßen Depalettierungsvorrichtung sind als Vorteile und vorteilhafte Ausgestaltungen des erfindungsgemäßen Verfahrens zum Betreiben einer solchen Depalettierungsvorrichtung anzusehen und umgekehrt.

Erfindungsgemäß ist eine Depalettierungsvorrichtung zum Depalettieren eines Transportbehälters von einer Ladefläche gemäß dem unabhängigen Anspruch 1 vorgesehen.

Bei dem Transportbehälter kann es sich um eine nach oben offene Kiste handeln, welche auf der Ladefläche aufstellbar ist. Insbesondere kann der Transportbehälter einen Verbundboden aufweisen, sodass mehrere dieser Ladungsträger formschlüssig aufeinandergestapelt werden können. Mit einem Depalettieren des Transportbehälters von der Ladefläche ist gemeint, dass der auf der Ladefläche oder auf einem weiteren Transportbehälter stehende Transportbehälter von der Ladefläche bzw. von dem weiteren Transportbehälter abgeladen wird.

An dem Gestell der Depalettierungsvorrichtung ist die Gurtfördereinheit angeordnet, welche mittels der Antriebseinheit derart höhenverstellbar ist, dass die Gurtfördereinheit auf eine Vielzahl von Arbeitshöhen einstellbar ist. Dies ist insofern vorteilhaft, als die Depalettierungsvorrichtung dadurch auf voneinander unterschiedliche Höhen einstellbar ist, um beispielsweise mehrere Schichten von Transportbehältern besonders effizient von der Ladefläche depalettieren bzw. entladen zu können.

Die insbesondere in ein Gurtband der Gurtfördereinheit integrierten Kugeln ragen insbesondere an einer Oberseite der Gurtfördereinheit aus dieser heraus, wodurch durch die Kugeln die Auflagefläche gebildet ist, worauf der Transportbehälter aufstellbar ist. Indem die Kugeln mittels der Antriebseinheit rotierbar sind und mittels der Antriebseinheit auch das Gurtband der Gurtfördereinheit antreibbar ist, ist der auf die Auflagefläche abgestellte Transportbehälter in Bezug zu der Auflagefläche bewegbar.

Hierdurch ist eine besonders flexible Depalettierungsvorrichtung bereitgestellt. Da die Teile der Depalettierungsvorrichtung insbesondere innerhalb des Gestells angeordnet und innerhalb des Gestells bewegbar sind, ist die Depalettierungsvorrichtung auch besonders platzsparend.

Die Antriebseinheit weist einen Motor auf, mittels dessen mechanischer Arbeit über die Höhenverstelleinrichtung die Gurtfördereinheit höhenverstellbar ist. Zudem weist die Antriebseinheit einen weiteren Motor auf, mittels welchem das Förderband über Walzen antreibbar ist. Des Weiteren weist die Antriebseinrichtung einen dritten Motor auf, mittels welchem die Kugeln antreibbar sind. Alternativ ist die Antriebseinheit durch einen einzigen Motor gebildet ist, dessen Bewegungsarbeit der Höhenverstelleinrichtung, den Walzen und den Kugeln zuführbar ist.

Erfindungsgemäß ist vorgesehen, dass die Kugeln mittels der Antriebseinheit jeweils zumindest um zwei senkrecht zueinander verlaufende Achsen drehbar sind, welche parallel zur Auflagefläche verlaufen. Die beiden zueinander parallel verlaufenden Achsen können mit einer Oberseite der Gurtfördereinheit, insbesondere mit einer Oberseite eines Förderbands der Gurtfördereinheit, zusammenfallen. Hierdurch ist es möglich, dass der auf der Auflagefläche aufgestellte Transportbehälter, das heißt der auf die Kugeln aufgestellte Transportbehälter, entlang einer Ebene der Auflagefläche insbesondere gleichzeitig in zwei in der Ebene liegenden Richtungen bewegbar ist.

Ebenfalls erfindungsgemäß ist eine Greifeinheit mit einem Greifer vorgesehen, mittels welcher der auf der Ladefläche angeordnete Transportbehälter greifbar und auf die Gurtfördereinheit aufstellbar ist. Mit anderen Worten weist die Depalettierungsvorrichtung eine Greifeinheit auf, deren Greifer dazu eingerichtet ist, reversibel form- und/oder kraftschlüssig mit dem Transportbehälter verbunden zu werden. Der so reversibel mit dem Greifer verbundene Transportbehälter ist dadurch mittels der Greifeinheit von der Ladefläche abladbar und auf die Auflagefläche aufstellbar.

In einer besonders bevorzugten Ausführungsform der Erfindung ist vorgesehen, dass der Greifer als ein Sauggreifer ausgebildet ist. Das bedeutet, dass der Greifer mittels eines Unterdrucks eine kraftschlüssige Verbindung, welche reversibel, d. h. lösbar ist, zwischen den Greifer und dem Transportbehälter herstellen kann. Vorteilhaft hierbei ist, dass hierfür an dem Transportbehälter lediglich eine zu dem Sauggreifer korrespondierende glatte Fläche für eine reversible kraftschlüssige Verbindung zwischen dem Sauggreifer und dem Transportbehälter genutzt wird.

Als weiter vorteilhaft hat es sich gezeigt, dass die Greifeinheit einen linear bewegbaren Greifarm umfasst, an welchem der Greifer angeordnet ist. Mit anderen Worten ist der Greifarm nicht schwenkbar, sodass ein Sicherheitsbereich für die Depalettierungsvorrichtung besonders klein ausfallen oder vollständig entfallen kann.

In einer weiteren vorteilhaften Ausführungsform der Erfindung ist eine Kamera vorgesehen, mittels welcher Lagedaten der Depalettierungsvorrichtung relativ zu der Ladefläche aufnehmbar sind, wobei die Depalettierungsvorrichtung eine Steuereinrichtung aufweist, welche dazu eingerichtet ist, basierend auf den Lagedaten die Antriebseinheit und/oder die Greifeinheit zu steuern. Dies ist besonders vorteilhaft, da unter einer Auswertung der auf Kamerabildern basierenden Lagedaten die Depalettierungsvorrichtung besonders exakt steuerbar ist. Des Weiteren kann ein besonders exaktes Ausrichten der Depalettierungsvorrichtung in Bezug zu der Ladefläche und/oder in Bezug zu einem zu depalettierenden Transportbehälter entfallen. Die Ladefläche kann in einem Arbeitsbereich der Depalettierungsvorrichtung aufgestellt werden, wobei eine Längs- und eine Querausdehnung des Arbeitsbereichs größer sein können als eine Längs- und Querausdehnung der Ladefläche. Anders ausgedrückt ist ein Genauigkeitsmangel beim Aufstellen der Ladefläche in Bezug zu der Depalettierungsvorrichtung mittels der die Lagedaten auswertenden Steuereinrichtung ausgleichbar.

Gemäß einer weiteren vorteilhaften Ausführungsform ist vorgesehen, dass das Gestell eine Aufnahme für eine Hebevorrichtung eines Flurförderzeugs aufweist, sodass die Depalettierungsvorrichtung mittels des Flurförderzeugs anhebbar und anschließend transportierbar ist. Das bedeutet, dass die Depalettierungsvorrichtung beispielsweise mittels eines als Gabelstapler ausgeführten Flurförderzeugs angehoben und an einen anderen Ort, insbesondere Einsatzort, verbracht werden kann. Dementsprechend ist es nicht zwingend nötig, die Ladefläche in Bezug zu der Depalettierungsvorrichtung zu positionieren, sondern es ist auch einfach möglich, die Depalettierungsvorrichtung in Bezug zu der Ladefläche zu positionieren. Hierbei besonders vorteilhaft ist, dass die Depalettierungsvorrichtung hinsichtlich ihres Einsatzortes besonders flexibel ausgeführt ist.

Alternativ oder zusätzlich ist vorgesehen, dass an dem Gestell eine Bodenrolleinheit angeordnet ist. Diese Bodenrolleinheit kann beispielsweise durch eine oder mehrere, bevorzugt vier Bodenkontaktelemente, welche jeweils als ein Rad etc. ausgebildet sein kann, gebildet sein. Dementsprechend ist es möglich, die Depalettierungsvorrichtung ohne weitere Hilfsmittel an einen anderen Einsatzort zu verbringen.

Zudem betrifft die Erfindung ein Verfahren zum Betreiben der erfindungsgemäßen Depalettierungsvorrichtung oder einer vorteilhaften Ausführungsform der erfindungsgemäßen Depalettierungsvorrichtung. Bei diesem Verfahren zum Depalettieren des Transportbehälters von der Ladefläche werden die Gurtfördereinheiten mittels der Antriebseinheit höhenverstellt und die in die Gurtfördereinheit integrierten und daraus herausragenden Kugel rotiert. Mittels der Antriebseinheit wird die Ladefläche zunächst auf eine gewünschte, zum Beispiel besonders ergonomisch vorteilhafte, Höhe eingestellt. Dann wird der Transportbehälter, zum Beispiel mittels eines Arbeiters, von der Ladefläche abgehoben und auf die Auflagefläche der Depalettierungsvorrichtung aufgestellt. Mittels der auf der Gurtfördereinheit herausragenden Kugeln wird der auf die Auflagefläche aufgestellte Transportbehälter, welcher dementsprechend mit einer bestimmten Anzahl der Kugeln in Kontakt steht, translatorisch bewegt und/oder gedreht.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigt:
- Fig. 1: eine schematische Perspektivansicht einer Depalettierungsvorrichtung; und
- Fig. 2: eine schematische Draufsicht der Depalettierungsvorrichtung.

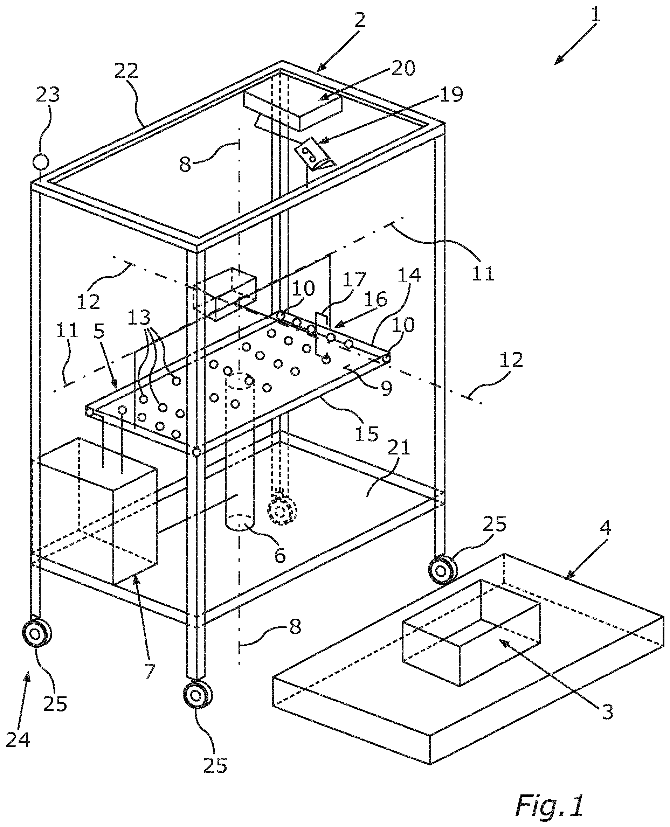

Fig. 1 zeigt in einer schematischen Perspektivansicht eine Depalettierungsvorrichtung 1, welche ein Gestell 2 aufweist. An dem Gestell 2 ist eine Gurtfördereinheit 5 angeordnet, welche höhenverstellbar ist. Beispielsweise kann die Gurtfördereinheit 5 über eine Höhenverstelleinrichtung 6 an dem Gestell 2 angeordnet sein. Die Höhenverstelleinrichtung 6 kann beispielsweise als ein mittels einer Antriebseinheit 7 antreibbarer Hubmechanismus ausgeführt sein. Es kann sich bei der Höhenverstelleinrichtung 6 beispielsweise um einen hydraulisch und/oder pneumatisch antreibbaren Hubzylinder handeln, wobei ein zum Bewegen des Hubzylinders aufzuwendender Hydraulik- und/oder Pneumatikdruck mittels der Antriebseinheit 7 bereitgestellt werden kann. Ferner kann gemäß einem Ausführungsbeispiel der Erfindung die Antriebseinheit 7 einen Motor aufweisen. mittels dessen mechanischer Arbeit über die Höhenverstelleinrichtung 6 die Gurtfördereinheit 5 höhenverstellbar ist. Insbesondere ist die Gurtfördereinheit 5 entlang einer Hochachse 8 der Depalettierungsvorrichtung 1 bzw. parallel zu der Hochachse 8 verstellbar.

Die Gurtfördereinheit 5 weist ein Förderband 9 auf, welches durch zumindest zwei Walzen 10 auf Spannung gehalten wird. Hierbei verlaufen die Walzen 10 parallel zu einer Querachse 11 der Depalettierungsvorrichtung 1. Mit anderen Worten verlaufen die Walzen 10 quer zu einer Längsachse 12 der Depalettierungsvorrichtung 1. Das Förderband 9 kann durch mehrere, miteinander gelenkig verbundene Segmente (nicht dargestellt) gebildet sein.

Die Gurtfördereinheit 5 weist mehrere Kugeln 13 auf, welche aus der Gurtfördereinheit 5 herausragen. Insbesondere können die Kugeln 13 in das Förderband 9 ortsfest aber dennoch bewegbar, d. h. rotierbar, integriert sein. Dementsprechend können die Kugeln 13 aus einem Obertrum 14 und aus einem Untertrum 15 herausragen. Das bedeutet, dass die Kugeln 13 in dieselbe Richtung bewegbar sind, in welche das Förderband 9 bewegbar ist. Ein Zentrum der jeweiligen Kugeln wird also bei einer Bewegung des Förderbands 9 translatorisch mit dem Förderband 9 jeweils mitbewegt.

Mittels der Antriebseinheit 7 ist die Gurtfördereinheit 5, insbesondere dessen Förderband 9, antreibbar. In demselben oben genannten Ausführungsbeispiel der Erfindung kann die Antriebseinheit 7 einen weiteren Motor umfassen, welcher mechanisch mit einer der Walzen 10 verbunden ist, sodass mittels des weiteren Motors die damit verbundene Walze 10 drehbar ist. Da das Förderband 9 mittels der Walzen 10 auf Spannung gehalten wird, steht das Förderband 9 mit den Walzen 10 reibschlüssig in Kontakt. Indem mittels der Antriebseinheit 7 die Walzen drehbar sind, ist dementsprechend das Förderband 9 der Gurtfördereinheit 5 mittels der Antriebseinheit 7 antreibbar.

Ebenfalls mittels der Antriebseinheit 7, gemäß demselben oben aufgeführten Ausführungsbeispiel der Erfindung, nämlich mittels eines dritten Motors, sind die in der Gurtfördereinheit 5 integrierten Kugeln 13 rotierbar. Es ist also denkbar, dass die Antriebseinheit 7 durch drei Motoren gebildet ist. Hierbei kann jeder der drei Motoren einen eigenen Zweck erfüllen. In diesem Fall kann mittels des Motors die Gurtfördereinheit 5 höhenverstellbar sein, mittels des weiteren Motors das Förderband 9 über die Walzen 10 antreibbar sein und mittels des dritten Motors die Kugeln 13 antreibbar sein. Es ist aber auch denkbar, dass in einem unterschiedlichen Ausführungsbeispiel der Erfindung die Antriebseinheit 7 durch einen einzigen Motor gebildet ist, dessen Bewegungsarbeit beispielsweise über eine Getriebe- und/oder Umschaltanordnung der Höhenverstelleinrichtung 6, den Walzen 10 und/oder den Kugeln 13 zugeführt wird.

Beispielsweise können die Kugeln mittels der Antriebseinheit 7 so rotierbar sein, dass deren Rotationsrichtung parallel zu einer durch die Hochachse 8 und die Querachse 11 gebildeten Ebene verläuft. Anders ausgedrückt kann die Rotationsrichtung der Kugeln 13 senkrecht zu einer Bewegungsrichtung des Förderbands 9 verlaufen. Wieder anders ausgedrückt können die jeweiligen Mittelpunkte der Kugeln 13 jeweils mit einer ersten Rotationsachsen und einer zweiten Rotationsachsen zusammenfallen, welche senkrecht zueinander liegenden. Die erste und die zweite Rotationsachse können parallel zu der Auflagefläche, insbesondere parallel zu dem Obertrum 14 und/oder zu dem Untertrum 15 des Förderbands 9 verlaufen. Um diese Rotationsachsen können die Kugeln 13 rotierbar sein. Die Kugeln 13 können darüber hinaus auch um eine dritte, senkrecht zu der ersten und der zweiten Rotationsachse verlaufende dritte, vertikale Rotationsachse rotierbar, d. h. drehbar sein. Somit ist gewährleistet, dass eine Rotationsbewegung des auf den Kugeln stehenden Transportbehälters 3 um dessen Hochachse jedenfalls ermöglicht ist. Mittels der Antriebseinheit 7 können die Kugeln 13 in zwei Richtungen rotierbar sein. Das bedeutet, dass den Kugeln 13 mittels der Antriebseinheit 7 eine erste Rotation um die erste Rotationsachse und eine zweite Rotation um die zweite Rotationsachse insbesondere zeitgleich verliehen werden kann. Insbesondere ist es von Vorteil, wenn die jeweiligen Kugeln 13 voneinander unabhängig mittels der Antriebseinheit 7 jeweils um die zwei Rotationsachsen senkrecht drehbar sind. Somit ist der Transportbehälter 3 mittels der Depalettierungsvorrichtung 1 bedarfsgemäß in Bezug zu seiner Hochachse drehbar, sodass bestimmbar ist, welche Lage der Transportbehälter 3 auf der Auflagefläche einnimmt.

Die aus der Gurtfördereinheit 5 herausragenden Kugeln 13 bilden auf dem Obertrum 14 des Förderbands 9 eine Auflagefläche, auf welche der Transportbehälter 3 aufstellbar ist. Anders ausgedrückt ist ein Außenboden des Transportbehälters 3 mit einer Vielzahl von Kugeln 13 in unmittelbaren Kontakt bringbar. Dies hat zur Folge, dass der Transportbehälter 3 mittels einer translatorischen Bewegung des Förderbands 9 translatorisch, das heißt parallel zur Längsachse 12 der Depalettierungsvorrichtung 1, bewegbar ist. Alternativ oder zusätzlich ist der Transportbehälter 3 mittels der Rotation quer zu der Längsachse 12 translatorisch parallel zu der Querachse 11 der Depalettierungsvorrichtung 1 bewegbar. Dadurch ist es möglich, dass der Transportbehälter 3 entlang einer Kurve in der Depalettierungsvorrichtung 1 bewegbar ist.

Die Depalettierungsvorrichtung 1 ist, wie bisher beschrieben, so einsetzbar, dass der Transportbehälter 3 von der Ladefläche 4 zum Beispiel mittels eines Arbeiters oder einer weiteren Vorrichtung, z. B. Kran, Roboter etc., auf die Auflagefläche zu stellen ist. Bei einer besonders bevorzugten Ausführungsform weist die Depalettierungsvorrichtung 1 eine Greifeinheit 16 auf, welche einen Greifer 17 umfasst. Mittels dieser Greifeinheit 16 kann der Transportbehälter 3, insbesondere automatisch bzw. automatisiert, ohne einer weiteren, von der Depalettierungsvorrichtung 1 unterschiedlichen Vorrichtung den Transportbehälter 3 von der Ladefläche 4 abladen. Das bedeutet, dass ein Zutun eines Arbeiters zum Depalettieren des Transportbehälters vermieden werden kann.

Insbesondere kann diese Greifeinheit 16 entlang der Hochachse 8 in einem festen Abstand von der Gurtfördereinheit 5 bzw. von dem Förderband 9 angeordnet sein. Das bedeutet, dass die Greifeinheit 16 höhenverstellbar ist, indem die Gurtfördereinheit 5 höhenverstellbar ist. Es ist aber auch denkbar, dass die Greifeinheit 16 in Bezug zu der Gurtfördereinheit 5, insbesondere parallel zu der Hochachse 8, Querachse 11 und/oder Längsachse 12 verstellbar ist.

Der Greifer 17 ist dazu eingerichtet, den auf der Ladefläche 4 angeordneten Transportbehälter 3 zu greifen und auf die Gurtfördereinheit aufzustellen. Hierzu kann der Greifer 17 eine Form aufweisen, welche mit einer Form des Transportbehälters 3, z. B. einer Außenkontur des Transportbehälters 3, korrespondiert, um diesen beispielsweise formschlüssig und/oder kraftschlüssig greifen zu können. Besonders bevorzugt ist, wenn der Greifer 17 als ein Sauggreifer ausgebildet ist. Das bedeutet, dass zwischen dem Sauggreifer und einer entsprechend damit korrespondierenden idealerweise glatten Fläche des Transportbehälters 3 ein Unterdruck erzeugbar ist, wodurch der Transportbehälter 3 hauptsächlich kraftschlüssig und wieder lösbar, also reversibel, mit dem Sauggreifer verbindbar ist.

Es ist des Weiteren denkbar, dass die Greifeinheit 16 einen linear bewegbaren Greifarm 18 aufweist, wodurch der Transportbehälter 3, wenn dieser reversibel mit dem Greifer 17 verbunden ist, linear, das heißt parallel zu der Längsachse 12, bewegbar ist. Somit ist es besonders einfach möglich, den Transportbehälter 3 mittels der Greifeinheit 16 reversibel mit dieser zu verbinden, und auf der Auflagefläche abzustellen.

Ferner kann die Greifeinheit 16 linear parallel zu der Querachse 11 bewegbar sein. In Verbindung mit der höhenverstellbaren Gurtfördereinheit 5 führt dies dazu, dass mittels des Greifers 17 der auf der Ladefläche 4 aufgestellte Transportbehälter 3, unabhängig von dessen Lage auf der Ladefläche 4, mittels des Greifers 17 erreichbar ist. Eine weitere Folge davon ist, dass ein Depalettieren des Transportbehälters 3, das heißt ein Entladen des Transportbehälters 3 von der Ladefläche 4, automatisiert bzw. automatisch vonstattengehen kann, da ein Eingreifen von einem Arbeiter nicht notwendig ist.

Dadurch, dass ein Bereich, in welchem sich bewegende Teile der Depalettierungsvorrichtung 1 befinden können, durch das Gestell 2 in Verbindung mit Außenmaßen der Ladefläche 4 eindeutig begrenzt ist, ist es nicht erforderlich, einen über diesen Bereich hinausgehenden Sicherheitsbereich zur Vermeidung eines Verletzungsrisikos von Arbeitern festzulegen. Um eine Arbeitssicherheit in einer direkten Umgebung der Depalettierungsvorrichtung 1 noch weiter zu erhöhen, können Seiten des Gestells 2 ganz oder teilweise zum Beispiel mittels Platten abgedeckt werden. Somit ist wirksam verhindert, dass ein Arbeiter versehentlich in den Betriebsbereich der Depalettierungsvorrichtung 1 hineingreift und sich dabei verletzt.

Ferner kann die Depalettierungsvorrichtung 1 eine Kamera 19 aufweisen, deren Kamerabild von einer Steuereinrichtung 20 empfangbar ist. Das bedeutet, dass die Kamera 19 kabellos und/oder kabelgebunden mit der Steuereinrichtung 20 verbunden sein kann, sodass mittels der Kamera 19 der Steuereinrichtung 20 das Kamerabild zuführbar ist. Die Steuereinrichtung 20 ist dazu eingerichtet, das Kamerabild dahingehend auszuwerten, wie die Depalettierungsvorrichtung 1 relativ zu der Ladefläche 4 positioniert ist. Mit anderen Worten ist die Steuereinrichtung 20 dazu eingerichtet, basierend auf dem Kamerabild Lagedaten zu generieren und/oder zu speichern. Ferner ist die Steuereinrichtung 20 dazu eingerichtet, basierend auf diesen Lagedaten die Antriebseinheit 7 und/oder die Greifeinheit 16 zu steuern. Hierdurch wird erreicht, dass ein höchstgenaues, insbesondere manuelles Ausrichten der Depalettierungsvorrichtung 1 in Bezug zu der Ladefläche 4 oder umgekehrt entfallen kann. Eventuelle Unzulänglichkeiten bei einem Ausrichten der Depalettierungsvorrichtung1 und der Ladefläche 4 zueinander sind somit aufgrund der durch die Lagedaten optimierten Steuerung der Antriebseinheit 7 und/oder der Greifeinheit 16 ausgleichbar.

Es ist auch denkbar, dass die Steuereinrichtung 20 im Zusammenwirken mit der Kamera 19 das Kamerabild dahingehend auszuwerten, wie die Depalettierungsvorrichtung 1 relativ zu dem Transportbehälter 3 positioniert ist. Insbesondere kann beispielsweise ausgewertet werden, wie der Greifer 17 der Greifeinheit 16 zu dem Transportbehälter 3 positioniert ist. Somit ist sicherstellbar bzw. sichergestellts, dass der Greifer 17 besonders effizient und genau den Transportbehälter 3 greifen kann.

Die Depalettierungsvorrichtung 1, insbesondere dessen Gestell 2, kann eine Aufnahme für eine Hebevorrichtung eines Flurförderzeugs aufweisen. Beispielsweise kann ein unterer Boden 21 der Depalettierungsvorrichtung 1 so angeordnet sein, dass dieser beispielsweise von Zinken eines Gabelstaplers oder Hubwagens unterfahren werden kann. Es ist aber auch denkbar, dass ein oberer Rahmen 22 so stabil ausgeführt ist und/oder zumindest eine Öse 23 aufweist, dass die Depalettierungsvorrichtung 1 zum Beispiel mittels eines in den oberen Rahmen 22 bzw. in die Öse 23 eingreifenden Haken eines Flaschenzugs, beispielsweise eines Krans, anhebbar ist. Im Anschluss an ein Anheben der Depalettierungsvorrichtung 1 ist diese transportierbar, das heißt, die Depalettierungsvorrichtung 1 ist an einen anderen Ort, insbesondere Einsatzort, verbringbar. Das bedeutet, dass nicht ausschließlich eine jeweilige Ladefläche 4 zu der Depalettierungsvorrichtung 1 verbracht werden muss, sondern dass es alternativ oder zusätzlich möglich ist, die Depalettierungsvorrichtung 1 zu einer zu entladenden Ladefläche 4 zu verbringen.

Um die Depalettierungsvorrichtung 1 besonders einfach an einen anderen Ort bzw. Einsatzort bringen zu können, kann das Gestell 2 eine Bodenrolleinheit 24 aufweisen. Beispielsweise kann die Bodenrolleinheit 24 zumindest zwei, bevorzugt vier drehbare Bodenkontaktelemente 25 aufweisen, welche beispielsweise jeweils als ein Rad ausgebildet sein können. Hierdurch ist es möglich, die Depalettierungsvorrichtung 1 ohne den Einsatz eines weiteren Hilfsmittels, beispielsweise Flurförderzeugs, an einen anderen Ort zu verbringen.

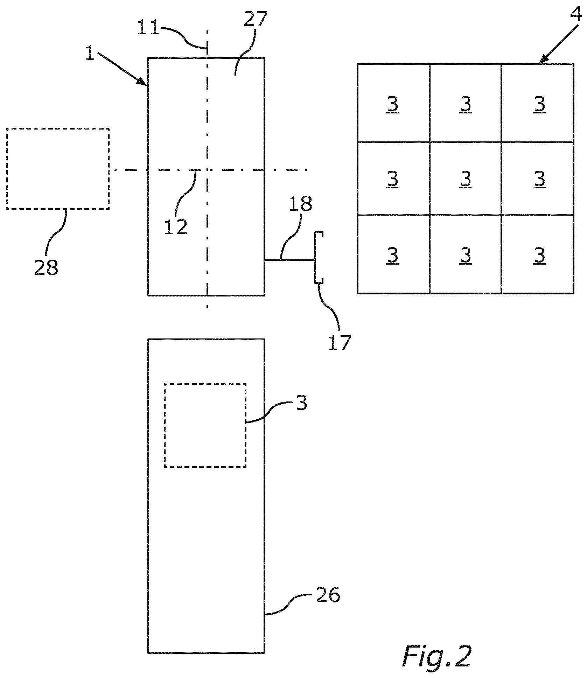

Fig. 2 zeigt in einer schematischen Draufsicht die Depalettierungsvorrichtung 1, wie diese beispielhaft in einem Wareneingang eines Lagers einsetzbar ist. Die Depalettierungsvorrichtung 1 ist hierzu in Bezug zu der Ladefläche 4 so ausgerichtet, dass auf der Ladefläche 4 aufgestellte Transportbehälter 3 von der Depalettierungsvorrichtung 1, insbesondere mittels dessen Greifer 17 erreichbar sind. Idealerweise ist die Depalettierungsvorrichtung 1 in Bezug zu einer Anschlusslagerstruktur, beispielsweise einem Eingangsgurtförderer 26 des Lagers, ausgerichtet. Der Transportbehälter 3 ist mittels des Greifers 17 greifbar, und anhebbar, indem dieser bzw. die Gurtfördereinheit 5 mittels der Höhenverstelleinrichtung 6 anhebbar sind. Dadurch, dass der vorteilhafterweise als Sauggreifer ausgebildete Greifer 17 über den Greifarm 18 linear parallel zu der Längsachse 12 bewegbar ist, ist der reversibel mit dem Greifer 17 verbundene Transportbehälter 3 ebenfalls linear parallel zu der Längsachse 12 bewegbar. Insbesondere ist der Transportbehälter 3 dadurch in einen Innenbereich 27 verbringbar. Da die Gurtfördereinheit 5, respektive das Förderband 9 und die Kugeln 13, welche die Auflagefläche bilden, in dem Innenbereich 27 angeordnet sind, ist der Transportbehälter 3 in dem Innenbereich 27 auf diese aufstellbar. Bedarfsweise ist es möglich, eine Lage des Transportbehälters 3 im Innenbereich 27 der Depalettierungsvorrichtung 1 zu ändern. Beispielsweise ist der Transportbehälter 3 translatorisch parallel zu der Längsachse 12 bewegbar, indem das Förderband 9 über die Walzen 10 mittels der Antriebseinheit 7 antreibbar ist. Ferner ist der Transportbehälter 3 in dem Innenbereich 27 der Depalettierungsvorrichtung 1 translatorisch parallel zu der Querachse 11 bewegbar, indem mittels der Antriebseinheit 7 zumindest ein Teil der Kugeln 13 rotierbar ist. Insbesondere ist der Transportbehälter 3 um die senkrecht zur Zeichenebene der Fig. 2 stehende Hochachse 8 drehbar, indem zumindest ein Teil der Kugeln 13, vorzugsweise voneinander unabhängig, wie oben beschrieben mittels der Antriebseinheit 7 in zumindest zwei Richtungen, d. h. um die erste, die zweite und die dritte Rotationsachse, rotierbar sind. So ist der Transportbehälter 3 in eine gewünschte Lage innerhalb des Innenbereichs 27 der Depalettierungsvorrichtung 1 bringbar.

Der Transportbehälter 3, welcher in dem Innenbereich 27 der Depalettierungsvorrichtung 1 in die gewünschte Lage bzw. Position gebracht worden ist, ist an eine Anschlusslagerstruktur übergebbar. Beispielsweise ist der Transportbehälter 3 an einen Eingangsgurtförderer 26 übergebbar beziehungsweise darauf aufstellbar. Hierzu ist der Transportbehälter 3, insbesondere mittels eines Teils der Kugeln 13, parallel zu der Querachse 11 bewegbar. Lediglich zum Zwecke der Übersicht ist in Fig. 2 ein Abstand zwischen der Depalettierungsvorrichtung 1 und dem Eingangsgurtförderer 26 dargestellt. Idealerweise und in Realität grenzt ein Obertrum des Eingangsgurtförderers 26 unmittelbar an das Obertrum 14 der Gurtfördereinheit 5 an. Indem der Transportbehälter 3 mittels der Kugeln von dem Obertrum 14 der Gurtfördereinheit 5 bzw. des Förderbands 9 herunterschiebbar ist, ist der Transportbehälter 3 auf das Obertrum des Eingangsgurtförderers 26 aufschiebbar.

Alternativ ist es aber auch denkbar, dass mittels der Depalettierungsvorrichtung 1 der Transportbehälter 3 entlang der Längsachse 12 beförderbar ist, sodass der Transportbehälter 3 an einen weiteren Eingangsgurtförderer 28 übergebbar ist, welcher sich parallel zu der Längsachse 12 der Depalettierungsvorrichtung 1 an diese anschließt.

Fig. 2 zeigt des Weiteren einen, gestrichelt dargestellten, Transportbehälter 3, welcher von der Ladefläche 4 mittels der Depalettierungsvorrichtung 1 abgeladen und an den Eingangsgurtförderer 26 übergeben wurde. Mittels des Eingangsgurtförderers 26 ist der mittels der Depalettierungsvorrichtung 1 depalettierte Transportbehälter einer sich anschließenden Weiterbehandlung zuführbar.

## Patentansprüche

1. Depalettierungsvorrichtung (1) zum Depalettieren eines Transportbehälters (3) von einer Ladefläche (4), mit einer Antriebseinheit (7) und einer ein Förderband (9) aufweisenden Gurtfördereinheit (5), welche über eine Höhenverstelleinrichtung (6) mittels der Antriebseinheit (7) höhenverstellbar an einem Gestell (2) der Depalettierungsvorrichtung (1) angeordnet ist, und mehreren in die Gurtfördereinheit (5) integrierte und daraus herausragenden Kugeln (13), welche mittels der Antriebseinheit (7) rotierbar sind und eine Auflagefläche für den Transportbehälter (3) bilden, **dadurch gekennzeichnet, dass**
• die Antriebseinheit (7) einen Motor, mittels dessen mechanischer Arbeit über die Höhenverstelleinrichtung (6) die Gurtfördereinheit (5) höhenverstellbar ist, einen weiteren Motor, mittels welchem das Förderband (9) über Walzen (10) antreibbar ist, und einen dritten Motor aufweist, mittels welchem die Kugeln (13) antreibbar sind, oder
• die Antriebseinheit (7) durch einen einzigen Motor gebildet ist, dessen Bewegungsarbeit der Höhenverstelleinrichtung (6), den Walzen (10) und den Kugeln (13) zuführbar ist,
wobei die Kugeln (13) mittels der Antriebseinheit (7) jeweils zumindest um zwei senkrecht zueinander verlaufende Achsen drehbar sind, welche parallel zur Auflagefläche verlaufen, und eine Greifeinheit (16) mit einem Greifer (17) vorgesehen ist, mittels welcher der auf der Ladefläche (4) angeordnete Transportbehälter (3) greifbar und auf die Gurtfördereinheit (5) aufstellbar ist.

2. Depalettierungsvorrichtung (1) nach Anspruch 1,
**dadurch gekennzeichnet, dass**
der Greifer (17) als ein Sauggreifer ausgebildet ist.

3. Depalettierungsvorrichtung (1) nach einem Ansprüche 1 oder 2,
**dadurch gekennzeichnet, dass**
die Greifeinheit (16) einen linear bewegbaren Greifarm (18) aufweist, an welchem der Greifer (17) angeordnet ist.

4. Depalettierungsvorrichtung (1) nach einem der vorhergehenden Ansprüche,
**dadurch gekennzeichnet, dass**
eine Kamera (19) vorgesehen ist, mittels welcher Lagedaten der Depalettierungsvorrichtung (1) relativ zu der Ladefläche (4) aufnehmbar sind, wobei die Depalettierungsvorrichtung (1) eine Steuereinrichtung (20) aufweist, welche dazu eingerichtet ist, basierend auf den Lagedaten die Antriebseinheit (7) und/oder die Greifeinheit (16) zu steuern.

5. Depalettierungsvorrichtung (1) nach einem der vorhergehenden Ansprüche, **dadurch gekennzeichnet, dass**
das Gestell (2) eine Aufnahme für eine Hebevorrichtung eines Flurförderzeugs aufweist, sodass die Depalettierungsvorrichtung (1) mittels des Flurförderzeugs anhebbar und anschließend transportierbar ist.

6. Depalettierungsvorrichtung (1) nach einem der vorhergehenden Ansprüche, **dadurch gekennzeichnet, dass**
an dem Gestell (2) eine Bodenrolleneinheit (24) angeordnet ist.

7. Verfahren zum Betreiben einer Depalettierungsvorrichtung (1) nach einem der vorhergehenden Ansprüche, bei welchem zum Depalettieren eines Transportbehälters (3) von einer Ladefläche (4) die Gurtfördereinheit (5) mittels der Antriebseinheit (7) höhenverstellt und die in die Gurtfördereinheit (5) integrierten und daraus herausragenden Kugeln (13) rotiert werden.

## Claims

1. Depalletizing device (1) for depalletizing a transport container (3) from a loading surface (4), with a drive unit (7) and a belt conveyor unit (5) having a conveyor belt (9), which is arranged on a frame (2) of the depalletizing device (1) in a height-adjustable manner by means of the drive unit (7) via a height adjustment device (6), and several balls (13) integrated into the belt conveyor unit (5) and protruding therefrom, which are rotatable by means of the drive unit (7) and form a support surface for the transport container (3), **characterized in that**
• the drive unit (7) has a motor, by means of whose mechanical work the belt conveyor unit (5) is height-adjustable via the height adjustment device (6), a further motor, by means of which the conveyor belt (9) is drivable via rollers (10), and a third motor, by means of which the balls (13) are drivable, or
• the drive unit (7) is formed by a single motor, whose movement work is feedable to the height adjustment device (6), the rollers (10) and the balls (13),
wherein the balls (13) are each rotatable by means of the drive unit (7) at least about two axes extending perpendicular to one another, which extend parallel to the support surface, and a gripping unit (16) with a gripper (17) is provided, by means of which the transport container (3) arranged on the loading surface (4) is grippable and placeable on the belt conveyor unit (5).

2. Depalletizing device (1) according to claim 1,
**characterized in that**
the gripper (17) is designed as a suction gripper.

3. Depalletizing device (1) according to one of claims 1 or 2,
**characterized in that**
the gripping unit (16) has a linearly movable gripping arm (18), on which the gripper (17) is arranged.

4. Depalletizing device (1) according to one of the preceding claims,
**characterized in that**
a camera (19) is provided, by means of which position data of the depalletizing device (1) relative to the loading surface (4) are recordable, wherein the depalletizing device (1) has a control device (20), which is configured to control the drive unit (7) and/or the gripping unit (16) based on the position data.

5. Depalletizing device (1) according to one of the preceding claims,
**characterized in that**
the frame (2) has a receptacle for a lifting device of an industrial truck, so that the depalletizing device (1) is liftable by means of the industrial truck and subsequently transportable.

6. Depalletizing device (1) according to one of the preceding claims,
**characterized in that**
a floor roller unit (24) is arranged on the frame (2).

7. Method for operating a depalletizing device (1) according to one of the preceding claims, in which, for depalletizing a transport container (3) from a loading surface (4), the belt conveyor unit (5) is height-adjusted by means of the drive unit (7) and the balls (13) integrated into the belt conveyor unit (5) and protruding therefrom are rotated.

## Revendications

1. Dispositif de dépalettisation (1) pour dépalettiser un conteneur de transport (3) d'une surface de chargement (4), avec une unité d'entraînement (7) et une unité de convoyeur à courroie (5) comportant une courroie de convoyage (9), laquelle est disposée sur un bâti (2) du dispositif de dépalettisation (1) de manière réglable en hauteur au moyen de l'unité d'entraînement (7) par l'intermédiaire d'un dispositif de réglage en hauteur (6), et plusieurs billes (13) intégrées dans l'unité de convoyeur à courroie (5) et faisant saillie de celle-ci, lesquelles sont rotatives au moyen de l'unité d'entraînement (7) et forment une surface d'appui pour le conteneur de transport (3), **caractérisé en ce que**
• l'unité d'entraînement (7) comporte un moteur, au moyen duquel travail mécanique l'unité de convoyeur à courroie (5) est réglable en hauteur par l'intermédiaire du dispositif de réglage en hauteur (6), un autre moteur, au moyen duquel la courroie de convoyage (9) est entraînable par l'intermédiaire de rouleaux (10), et un troisième moteur, au moyen duquel les billes (13) sont entraînables, ou
• l'unité d'entraînement (7) est formée par un seul moteur, dont le travail de mouvement est apportable au dispositif de réglage en hauteur (6), aux rouleaux (10) et aux billes (13),
où les billes (13) sont rotatives au moyen de l'unité d'entraînement (7) chacune au moins autour de deux axes s'étendant perpendiculairement l'un à l'autre, lesquels s'étendent parallèlement à la surface d'appui, et une unité de préhension (16) avec un préhenseur (17) est prévue, au moyen de laquelle le conteneur de transport (3) disposé sur la surface de chargement (4) est saisissable et posable sur l'unité de convoyeur à courroie (5).

2. Dispositif de dépalettisation (1) selon la revendication 1,
**caractérisé en ce que**
le préhenseur (17) est conçu comme un préhenseur à ventouse.

3. Dispositif de dépalettisation (1) selon l'une des revendications 1 ou 2,
**caractérisé en ce que**
l'unité de préhension (16) comporte un bras de préhension (18) mobile linéairement, sur lequel le préhenseur (17) est disposé.

4. Dispositif de dépalettisation (1) selon l'une des revendications précédentes,
**caractérisé en ce qu'**
une caméra (19) est prévue, au moyen de laquelle des données de position du dispositif de dépalettisation (1) par rapport à la surface de chargement (4) sont enregistrables, où le dispositif de dépalettisation (1) comporte un dispositif de commande (20), lequel est configuré pour commander l'unité d'entraînement (7) et/ou l'unité de préhension (16) sur la base des données de position.

5. Dispositif de dépalettisation (1) selon l'une des revendications précédentes,
**caractérisé en ce que**
le bâti (2) comporte un logement pour un dispositif de levage d'un chariot de manutention, de sorte que le dispositif de dépalettisation (1) est levable au moyen du chariot de manutention et transportable ensuite.

6. Dispositif de dépalettisation (1) selon l'une des revendications précédentes,
**caractérisé en ce qu'**
une unité de rouleaux de sol (24) est disposée sur le bâti (2).

7. Procédé pour faire fonctionner un dispositif de dépalettisation (1) selon l'une des revendications précédentes, dans lequel, pour dépalettiser un conteneur de transport (3) d'une surface de chargement (4), l'unité de convoyeur à courroie (5) est réglée en hauteur au moyen de l'unité d'entraînement (7) et les billes (13) intégrées dans l'unité de convoyeur à courroie (5) et faisant saillie de celle-ci sont mises en rotation.
